# EUROPÄISCHE PATENTANMELDUNG

(11) **EP 2 746 238 A1**
(43) Veröffentlichungstag der Anmeldung: **25.06.2014**
(21) Anmeldenummer: 13001806.2
(22) Anmeldetag: 08.04.2013
(51) Int. Cl.: C04B 28/14, C04B 111/00

(54) **Holzwolleplatte mit spezifischem Gips**

(30) Priorität: 21.12.2012 DE 202012012306 U
(71) Anmelder: Knauf Insulation, 4600 Visé (BE)
(72) Erfinder: Seiler, Albert, 9710 Feistritz an der Drau (AT); Gez, Daniel, 94051 Hauzenberg (DE); Gasser, Karl-Heinz, 9712 Fresach (AT); Griesser, Horst, 9712 Fresach (AT)
(74) Vertreter: Müller-Boré & Partner Patentanwälte PartG mbB

(57) **Zusammenfassung**

Die vorliegende Erfindung betrifft ein Bindemittelsystem zur Herstellung von Holzwolle-Leichtbauelementen (HWL-Elementen), eine Bindemittelsuspension, umfassend das erfindungsgemäße Bindemittelsystem, und HWL-Elemente, umfassend die erfindungsgemäße Bindemittelsuspension in abgebundener Form.

## Beschreibung

Die vorliegende Erfindung betrifft ein Bindemittelsystem zur Herstellung von Holzwolle-Leichtbauelementen (HWL-Elementen), eine Bindemittelsuspension, umfassend das erfindungsgemäße Bindemittelsystem, und HWL-Elemente, umfassend die erfindungsgemäße Bindemittelsuspension in abgebundener Form.

Die Herstellung von Holzwolle-Leichtbauelementen, beispielsweise in einer Doppelbandanlage oder in einer Pressenanlage, ist hinlänglich bekannt und im Stand der Technik dokumentiert. Die im Strangpreßverfahren hergestellten Platten bedürfen nach der Wärmebeaufschlagung einer Reifezeit, die notwendig ist, um den Platten eine zur weiteren Manipulation notwendigen Festigkeit zu verleihen. In dieser Reifezeit geschehen auch die - bei hydraulischen Bindemitteln üblichen - Veränderungen der Dimensionen des HWL-Elements, dem sogenannten "Schwinden und Kriechen". Dies ist bei den derzeitig verwendeten Bindemittelsystemen oftmals in einem Ausmaß anzutreffen, welches außerhalb der normativ festgelegten Toleranzgrenzen liegt.

Durch diese Tatsache ergibt sich eine notwendige Reifezeit für die frisch hergestellten HWL-Elemente von mindestens drei, jedoch häufig sieben bis vierzehn Tagen. Erst nach diesem Zeitpunkt können die beispielsweise in Plattenform vorliegenden HWL-Elemente auf ihr Endmaß zugeschnitten werden, da erst dann garantiert werden kann, daß die Längenänderungen nunmehr in einem geringfügigen Ausmaß auftreten und die vorgeschriebenen Toleranzen eingehalten werden können.

Die Reifung, üblicherweise durchgeführt in temperierten Hallen (bspw. Warmhallen oder Kalthallen, welche zur Vermeidung von Minustemperaturen temperiert sind), bedingt somit eine nachteilige Verzögerung in der Herstellung der entsprechenden HWL-Elemente, und bedeutet zudem einen erhöhten Energieaufwand, der in Form von Wärme den Warmhallen zugeführt werden muß. Hiermit verbunden ist darüber hinaus ein erhöhter Ausstoß an CO₂.

Der vorliegenden Erfindung liegt somit die Aufgabe zugrunde, das Maß der Längenänderung in Folge von vorstehend genanntem "Schwinden und Kriechen" soweit zu reduzieren, daß diese grundsätzlich innerhalb der normativ festgelegten Toleranzgrenzen liegen und andererseits die Holzwolle-Leichtbauelemente bereits nach der Verpressung eine diesbezüglich ausreichende Stabilität aufweisen, so daß eine Konfektionierung und Besäumung auf das Endmaß innerhalb kurzer Zeit ermöglicht wird.

Diese Aufgabe wird gemäß der vorliegenden Erfindung durch Bereitstellen eines Bindemittelsystems zur Herstellung von Holzwolle-Leichtbauelementen gelöst, umfassend
(i) Gips in einer Menge von mindestens 50 Gew.-%, bezogen auf das Gesamtgewicht des Bindemittelsystems;
(ii) mindestens ein Fließmittel; und
(iii) optional Zement in einer Menge von weniger als 50 Gew.-%, bezogen auf das Gesamtgewicht des Bindemittelsystems.

Gemäß der vorliegenden Erfindung unterliegt der Begriff "Holzwolle-Leichtbauelement" keiner spezifischen Einschränkung und schließt sämtliche, auf Holzwollefasern basierenden Bauelemente ein. Dabei bezieht sich der allgemeine Ausdruck "Holzwollefasern" auf organisches Fasermaterial, welches beispielsweise Holzfasern, Holzwolle und Zellulose einschließt.

Die Begriffe "Leichtbauelement" und "Bauelement" werden hierin synonym verwendet und schließen jegliche Art eines geformten Erzeugnisses ein, beispielsweise eine Platte. Die Holzwollefasern weisen üblicherweise eine Länge von mehr als 2,5 cm, eine Breite von 1 bis 6 mm und eine Dicke von 0,1 bis 1 mm auf. Die in unregelmässiger Geometrie angeordneten, spröden Holzwollefasern liegen innerhalb des Bauelementes in Form eines offenporigen, dreidimensionalen Gerüstes verteilt vor und sind zumindest abschnittsweise untereinander über ein Bindemittelsystem verbunden.

Gemäß der vorliegenden Erfindung, betrifft der Begriff "Bindemittelsystem" jede Zusammensetzung, welche zumindest die vorstehend genannten Komponenten (i) und (ii), und optional auch die Komponente (iii) enthält.

Der Begriff "Zement" als Komponente (iii) unterliegt dabei keiner besonderen Einschränkung und umfasst beispielsweise Portland-Zement, Weißzement und Tonerdezement. Gemäß einer bevorzugten Ausführungsform umfasst das erfindungsgemäße Bindemittelsystem weniger als 30 Gew.-%, beispielsweise weniger als 20 Gew.-% oder weniger als 10 Gew.-% an Komponente (iii), jeweils bezogen auf das Gesamtgewicht des Bindemittelsystems. Gemäß einer weiteren Ausführungsform der vorliegenden Erfindung enthält das Bindemittelsystem keine Komponente (iii), also keinen Zement.

Das erfindungsgemäße Bindemittelsystem umfasst als Komponente (i) Gips in einer Menge von mindestens 50 Gew.-%, bezogen auf das Gesamtgewicht des Bindemittelsystems, bevorzugt mindestens 75 Gew.-%, noch bevorzugter mindestens 90 Gew.-%, beispielsweise mindestens 95 Gew.-% oder mindestens 99 Gew.-%. Gemäß einer bevorzugten Ausführungsform enthält der Gips α-Calciumsulfat-Halbhydrat, gemäß einer besonders bevorzugten Ausführungsform besteht der Gips im Wesentlichen aus α-Calciumsulfat-Halbhydrat.

Der Begriff "Fließmittel" wie hierin verwendet, unterliegt keiner spezifischen Einschränkung, solange das Fließmittel geeignet ist, eine für die Verwendung des erfindungsgemäßen Bindemittelsystems geeignete Viskosität herzustellen. Gemäß der vorliegenden Erfindung kann beispielsweise ein einziges Fließmittel verwendet werden oder es können mehrere für das Bindemittel geeigneten Fließmittel kombiniert werden. Geeignete erfindungsgemäße Fließmittel sind beispielsweise Fließmittel auf Basis von Lignin, Melamin, Naphthalin, Polyacrylat und Polycarboxylatether. Gemäß einer bevorzugten Ausführungsform umfasst das Fließmittel ein Melamin-Formaldehyd-Sulfonat. Gemäß einer alternativen Ausführungsform der vorliegenden Erfindung umfasst das Bindemittelsystem kein Fließmittel.

Die Menge an Fließmittel im erfindungsgemäßen Bindemittelsystem unterliegt keiner spezifischen Einschränkung, solange hierdurch eine für die Verwendung des erfindungsgemäßen Bindemittelsystems geeignete Viskosität hergestellt werden kann. Gemäß einer bevorzugten Ausführungsform beträgt die Menge an Fließmittel, bezogen auf das Gesamtgewicht des Bindemittelsystems, 0,01 bis 5 Gew.-%, bevorzugter 0,05 bis 3 Gew.-%, noch bevorzugter 0,1 bis 1 Gew.-%, und am meisten bevorzugt 0,15 bis 0,5 Gew.-%.

Zu einer weiteren Reduktion der Abbindezeit des Bindemittelsystems kann das erfindungsgemäße Bindemittelsystem weiter Reaktionsbeschleuniger umfassen, wie sie dem Fachmann bekannt sind.

Ein weiterer Aspekt der vorliegenden Erfindung betrifft eine Bindemittelsuspension, umfassend das vorstehend definierte Bindemittelsystem in einer Menge von 50 bis 75 Gew.-%, bezogen auf das Gesamtgewicht der Bindemittelsuspension, und Wasser in einer Menge von 25 bis 50 Gew.-%, bezogen auf das Gesamtgewicht der Bindemittelsuspension. Gemäß einer bevorzugten Ausführungsform umfasst die Bindemittelsuspension das vorstehend definierte Bindemittelsystem in einer Menge von 60 bis 70 Gew.-% und Wasser in einer Menge von 30 bis 40 Gew.-%.

Ein weiterer Aspekt der vorliegenden Erfindung betrifft ein Holzwolle-Leichtbauelement (HWL-Element), umfassend die vorstehend definierte Bindemittelsuspension in einer Menge von 40 bis 90 Gew.-%, bezogen auf das Gesamtgewicht des Holzwolle-Leichtbauelements, in abgebundener Form, und Holzfasern in einer Menge von 10 bis 60 Gew.-%, bezogen auf das Gesamtgewicht des Holzwolle-Leichtbauelements. Gemäß der vorliegenden Erfindung können die zu verwendenden Mengen an Bindemittel und Holzfasern derart eingestellt werden, dass eine gewünschte Festigkeitsklasse sowie ein spezifischer Anteil an offenen Poren erhalten werden kann.

Gemäß einer bevorzugten Ausführungsform umfasst das HWL-Element Holzfasern in einer Menge von 15 bis 40 Gew.-%, besonders bevorzugt 20 bis 30 Gew.-%, und die vorstehend definierte Bindemittelsuspension in abgebundener Form in einer Menge von 60 bis 85 Gew.-%, besonders bevorzugt 70 bis 80 Gew.-%.

Gemäß einer Ausführungsform weist das vorstehend definierte Holzwolle-Leichtbauelement eine Rohdichte im Bereich von 100 bis 1000 kg/m³, bevorzugt 250 bis 750 kg/m³, am meisten bevorzugt von 300 bis 600 kg/m³, auf.

Gemäß einer Ausführungsform umfasst das erfindungsgemäße HWL-Element weiter mindestens einen nicht brennbaren inerten Füllstoff in einer Menge von 0 bis 15 Gew.-%, bezogen auf das Gesamtgewicht des Holzwolle-Leichtbauelements. Der Begriff "nicht brennbarer inerter Füllstoff" wie hierin verwendet unterliegt keiner spezifischen Einschränkung und schließt sämtliche natürliche und synthetische, nicht oder nur sehr schwer entflammbaren Materialien, wie Sand, Kies, Metall, Mineralien und Ähnliches ein. Durch einen nicht brennbaren inerten Füllstoff kann der Brandschutz des erfindungsgemäßen HWL-Elements weiter verbessert werden, so dass das HWL-Element beispielsweise die Anforderungen der Brandklasse A2 gemäß EN 13501-1 (2009) erfüllt.

Gemäß einer Ausführungsform ist der mindestens eine nicht brennbare inerte Füllstoff ausgewählt aus natürlichen und künstlichen Füllstoffen, sowie deren Kombinationen, wobei die natürlichen Füllstoffe aus der Gruppe, bestehend aus Schwerspat, Magnetit, Hämatit, Limonit, Ilmenit, Serptentin, Flußsand, Flußkies, Grubenkies, Brechsand, Splitt, Steinschlag, Schotter aus gesundem Naturstein, sehr feinen Natursanden, Naturbims, Lavakies, Lavasand, Kieselgur, Schaumlava und Tuffen, sowie deren Kombinationen, ausgewählt sind, und wobei die künstlichen Füllstoffe aus der Gruppe, bestehend aus Stahlschrott, Stahlspänen, Stahlsand, Sintererzen, Ferrosilizium, Ferrophosphor, Metallschlacken, Betonklinkerbruch, künstlichem Korund, Siliziumcarbid, Sintersplitt, Blähperlit, Blähglimmer, Blähschiefer, Blähton, Diatomit, Ziegelsplitt, Steinkohlenschlacken, Steinkohlenflugaschen, Müllschlacken, granuliertem HOS, Hüttenbims, Sinterbims und Schaumkunststoffen, sowie deren Kombinationen, ausgewählt sind.

Dabei können die natürlichen Füllstoffe in ihrer natürlichen Körnung oder in mechanisch zerkleinerter Form zugegeben werden. Eine beispielhafte Übersicht über natürliche und künstliche Füllstoffe, welche gemäß der vorliegenden Erfindung Verwendung finden können, sind in der nachfolgenden Tabelle 1 aufgeführt.

**Tabelle 1.**

| natürliche Zuschläge | | künstliche Zuschläge |
|---|---|---|
| | | (einschließlich Recyclingprodukte) |
| natürlich gekörnt | mechanisch zerkleinert | |
| Schwerspat (Baryt BaSO₄) | gebrochener Schwerspat, Magnetit, | Stahlschrott, Stahlspäne, Stahlsand, Sintererze, Ferrosilizium, Ferrophosphor, Schmermetallschlacke Metallschlacken, Betonklinkerbruch, künstlicher Korund, Siliziumcarbid, Sintersplitt Blähperlit (geblähter Obsidian), Blähglimmer (Vermiculite), Blähschiefer, Blähton, Diatomit (gesint. Kieselgur), Ziegelsplitt, Steinkohlenschlacke, Steinkohlenflugasche, Müllschlacke, granuliete HOS, Güttenbims, Sinterbims, Schaumkunststoffe |
| Magnetit (Fe₃O₄) | Hämatit (Fe₂O₃), Limenit (FeTiO₃), Serptentin (Mg[(OH)₄Si₂O₅]) | |
| Flußsand | Brechsand, Splitt, | |
| Flußkies | Steinschlag, | |
| Grubenkies | Schotter aus gesundem Naturstein | |
| sehr feine Natursande, Naturbims, Lavakies, Lavasand (Lapilis), Kieselgur | gebrochene Schaumlava, gebrochene Tuffe | |

Gemäß einer bevorzugten Ausführungsform ist der mindestens eine nicht brennbare inerte Füllstoff Flußsand.

In einer weiteren Ausführungsform sind die Holzfasern vor dem Abbinden mit dem Bindemittel mit mindestens einem Flammschutzmittel imprägniert. Der Begriff "Flammschutzmittel" wie hierin verwendet schließt sämtliche Mittel ein, die zur Imprägnierung der Holzwollefasern geeignet sind und eine Verringerung der Entflammbarkeit bewirken. Dabei betrifft der Begriff "Imprägnieren" die Behandlung der Holzwollefasern mit einem flüssigen, gasförmigen oder festen Flammschutzmittel oder einer ein solches Flammschutzmittel enthaltenden Lösung oder Dispersion. Gemäß der vorliegenden Erfindung beinhaltet der Begriff "Imprägnieren" somit auch die oberflächliche Behandlung der Holzwollefasern, beispielsweise mit einer Lösung oder einem Feststoff.

Das mindestens eine Flammschutzmittel ist dabei beispielsweise aus halogenierten Flammschutzmitteln, Stickstoff-basierten Flammschutzmitteln, Organophosphor-Flammschutzmitteln und anorganischen Flammschutzmitteln ausgewählt. Halogenierte Flammschutzmittel sind beispielsweise polybromierte Diphenylether, Tetrabrombisphenol A (TBBPA) und Hexabromcyclododecan (HBCD). Stickstoff-basierte Flammschutzmittel sind beispielsweise Melamin und Harnstoffe. Organophosphor-Flammschutzmittel sind beispielsweise Tris(chlorethyl)phosphat (TCEP), Tri(chlorpropyle)phosphat (TCPP), Tris(dichlorisopropyl)phosphat (TDCPP), Triphenylphosphat (TPP), Tris(2-ethylhexyl)phosphat (TEHP) und Trikresolphosphat (TKP). Anorganische Flammschutzmittel sind beispielsweise Aluminiumhydroxid, Magnesiumhydroxid, Ammoniumphosphat, Ammoniumpolyphosphat, Ammoniumsulfat, Trinatriumphosphat, Hexametaphosphat und Dipentaerythydrit. Die verschiedenen Flammschutzmittel können erfindungsgemäß auch in jedweder Kombination eingesetzt werden.

Zur Imprägnierung der Holzwollefasern können Lösungen der vorstehend genannten Flammschutzmittel beispielsweise in Konzentrationen zwischen 5 und 50 Gew.-%, typischerweise in Konzentrationen von 25 bis 35 Gew.-% eingesetzt werden, wobei wässrige Lösungen verwendet werden können. Die Viskosität einer solchen Lösung bei 20 °C liegt beispielsweise im Bereich von 0,001 P (dPas) bis 0,1 P.

Die Dauer der Imprägnierung hängt beispielsweise von der Konzentration des Flammschutzmittels in der Imprägnierungslösung, der Größe der Holzwollefasern, der Temperatur und weiteren Faktoren ab und beträgt beispielsweise 60 Sekunden bis 60 Minuten, 2 bis 10 Minuten oder 3 bis 8 Minuten.

Ein weiterer Aspekt der vorliegenden Erfindung betrifft ein Verfahren zur Herstellung eines Holzwolle-Leichtbauelements wie vorstehend definiert, umfassend die Schritte (a) Bereitstellen von Holzwollefasern, (b) Hinzufügen einer Bindemittelsuspension wie vorstehend definiert und (c) Pressen der unter Schritt (b) erhaltenen behandelten Holzwollefasern. Gemäß einer alternativen Ausführungsform kann das erfindungsgemäße Bindemittelsystem in trockenem Zustand auch zu vorher (beispielsweise in Wasser) getränkten Holzwollefasern zugegeben werden.

Gemäß der vorliegenden Erfindung unterliegt der Schritt des Hinzufügens der wie vorstehend definierten Bindemittelsuspension zu den Holzwollefasern keiner speziellen Einschränkung, solange die jeweiligen Komponenten in einer für eine entsprechende Bindung wirksamen Menge wie vorstehend definiert vorhanden sind. Das Bindemittelsystem wird gemäß der vorliegenden Erfindung in Form einer Suspension auf die Holzwollefasern aufgebracht.

Das Pressen der Holzwollefasern im Schritt (c) des erfindungsgemäßen Verfahrens erfolgt beispielsweise mittels einer Doppelbandanlage oder einer Presse, gegebenenfalls unter Zuführung von Wärme. Gemäß einer bevorzugten Ausführungsform erfolgt das Pressen ohne Zuführung von Wärme.

Vorteilhafterweise können die HWL-Elemente der vorliegenden Erfindung schon nach weniger als 24 Stunden, insbesondere schon nach 8 Stunden, ausgeformt werden, da nach dieser Zeit die Aushärtung beendet ist und im Wesentlichen kein Schwinden und Kriechen der HWL-Elemente mehr auftritt, d.h. die HWL-Elemente sind struktur- bzw. formstabil.

Optional kann nach dem Ausformen des HWL-Elements noch ein Trocknungsschritt durchgeführt werden, beispielsweise in einem Ofen bei Temperaturen von 80 bis 220 °C, vorzugsweise von 120 bis 200 °C, für eine Dauer von beispielsweise 1 min bis 30 min, vorzugsweise von 5 bis 15 min. Durch den optionalen Trocknungsschritt verliert das HWL-Element weiter an Feuchtigkeit, wodurch das HWL-Element zusätzlich an Biege- und Druckfestigkeit gewinnt.

Je nach Bedarf des Anwenders können bei der Herstellung der HWL-Elemente die einzelnen Komponenten (Bindemittel, Holzfasern, nicht brennbare inerte Füllstoffe,...) und deren Mengen im Rahmen der vorstehend definierten Bereiche derart variiert werden, dass HWL-Elemente mit unterschiedlichen vorteilhaften Eigenschaften erhältlich sind. So können zum Beispiel besonders feuerfeste oder aber auch besonders leichte HWL-Elemente hergestellt werden. Die Eigenschaften der verschiedenen HWL-Elemente können beispielsweise nach der Herstellung über einen Glühverlust-Test (LOI, "Loss on ignition") charakterisiert werden. Bei einem derartigen Test, beispielsweise nach EN 13820:2003, werden die fertigen HWL-Elemente in einem Ofen thermisch zersetzt, und der Verlust an organischem Material wird gemessen. Besonders feuerfeste HWL-Elemente zeigen dabei einen LOI-Wert von kleiner 25%, wohingegen offenporige, leichte HWL-Elemente einen LOI-Wert von größer als 30% aufweisen. Die vorliegende Erfindung stellt vorteilhafterweise HWL-Elemente bereit, deren LOI-Werte durch Auswahl der Mengen der einzelnen Komponenten über einen Bereich von 10% bis 40% je nach Bedarf des Anwenders variiert werden können.

Zwar ermöglicht das erfindungsgemäße Verfahren die Herstellung eines Holzwolle-Leichtbauelements durch Verwendung einer Doppelbandanlage oder einer Preßform, jedoch ist das Verfahren der vorliegenden Erfindung hierauf nicht beschränkt, und beinhaltet sämtliche weitere, dem Fachmann bekannte Verfahren zum Herstellen von Komposit- oder Laminatprodukten.

Ein weiterer Aspekt der vorliegenden Erfindung betrifft ein Verbundelement, umfassend mindestens zwei Schichten, wobei mindestens eine Schicht ein wie vorstehend definiertes Holzwolle-Leichtbauelement ist.

Das Verbundelement der vorliegenden Erfindung kann dabei zwei oder mehrere Schichten aufweisen, deren Schichtabfolge keiner besonderen Einschränkung unterliegt, solange mindestens eine dieser Schichten ein wie vorstehend definiertes HWL-Element ist.

Die Gesamtdicke des Verbundelements kann dabei 3 mm bis 500 mm betragen. Beispiele für mögliche Untergrenzen der Gesamtdicke des Verbundelements sind 15 mm, 20 mm, 30 mm oder 50 mm, wobei die Obergrenze der Gesamtdicke des Verbundelements beispielsweise 300 mm, 400 mm oder 500 mm betragen kann.

Durch die Verwendung des vorstehend definierten Bindemittelsystems erreichen die hiermit hergestellten HWL-Elemente in einem Zeitraum von weniger als 24 Stunden, insbesondere schon innerhalb 8 Stunden, eine ausreichende Festigkeit, um sie einer weiteren Bearbeitung, beispielsweise einer Besäumung, zuführen zu können. Die Längenänderungen in Folge von "Schwinden und Kriechen" treten hierbei in einem solch geringen Ausmaß auf, daß sie innerhalb der normativ geregelten Toleranzgrenzen liegen, so daß nach der endgültigen Beendigung dieser Längenänderung die Plattendimensionen keiner signifikanten Änderung mehr unterliegen. Hierdurch ist eine Reifezeit in temperierten Hallen nicht erforderlich, was einerseits zu einer vorteilhaften Reduktion des dafür notwendigen Energiebedarfs und somit auch einer damit verbundenen Reduktion des Ausstoßes an CO₂ einher geht. Zudem ist das erfindungsgemäß verwendete Gips-Bindemittel kostengünstiger als beispielsweise der im Stand der Technik oftmals verwendete Weißzement.

Die vorliegende Erfindung wird in den nachstehenden Beispielen näher erläutert, ohne darauf beschränkt zu sein.

### Beispiel 1: Herstellung eines erfindungsgemäßen HWL-Elements

### Herstellung des Bindemittelsystems:

Vermengung von Alphagips der Mahlung AGMM der Fa. Knauf Gips KG (99,75 Gew.-%, bezogen auf das Gesamtgewicht des Bindemittelsystems) mit dem Fließmittel Melment F15g der Fa. BASF (0,25 Gew.-%, bezogen auf das Gesamtgewicht des Bindemittelsystems).

### Herstellung der Bindemittelsuspension:

Zugabe von Wasser (34 Gew.-%, bezogen auf das Gesamtgewicht der Bindemittelsuspension) zum vorstehend genannten Bindemittelsystem (66 Gew.-%, bezogen auf das Gesamtgewicht der Bindemittelsuspension).

### Herstellung des HWL-Elements:

Unter Verwendung der vorstehend genannten Bindemittelsuspension (76 Gew.-%, bezogen auf das Gesamtgewicht des HWL-Elements) und Holzwolle (24 Gew.-%, bezogen auf das Gesamtgewicht des HWL-Elements) werden Holzwolle-Leichtbauelemente hergestellt. Die Herstellung erfolgt dabei in einer Pressenanlage für 24 Stunden bei Raumtemperatur. Anschließend werden die ausgeformten HWL-Elemente für 9 min in einem Ofen bei 150 °C getrocknet.

Die Holzwolle-Leichtbauelemente zeigen nach Aushärtung des Binders einen LOI-Wert von 25-26%.

Versuchsweise wurden HWL-Elemente der vorstehenden Zusammensetzung auch bereits nach 5 Stunden statt nach 24 Stunden ausgeformt. Diese HWL-Elemente waren noch feuchter als die nach 24 Stunden ausgeformten HWL-Elemente, zeigten jedoch ebenso eine hohe Formstabilität, d.h. ein geringes Schwindverhalten. Die Aushärtung war demnach schon nach 5 Stunden im Wesentlichen abgeschlossen.

### Beispiel 2: Chemische Analyse

Die chemische Zusammensetzung (Gew.-%) der HWL-Elementen (Heraklith 25 mm) auf Basis des erfindungsgemäßen Gips-Bindemittels aus Beispiel 1 oder auf Basis von im Stand der Technik üblichem Weißzement (gemäß Brandschutzklasse A2, 46 Gew.-% Bindemittel, 23 Gew.-% Holzwolle, 5 Gew.-% Sand, 26 Gew.-% Lösung) oder Grauzement (49 Gew.-% Bindemittel, 25 Gew.-% Holzwolle, 26 Gew.-% Lösung) wurde mittels Röntgenfluoreszensanalyse bestimmt:

| **Binder** | **SiO₂ [%]** | **Al₂O₃ [%]** | **Fe₂O₃ [%]** | **CaO [%]** | **MgO [%]** | **Na₂O [%]** | **K₂O [%]** | **TiO₂ [%]** | **MnO [%]** | **P₂O₅ [%]** | **Cr₂O₃ [%]** | **SO₃ [%]** |
|---|---|---|---|---|---|---|---|---|---|---|---|---|
| **Gips** | 1,81 | 1,1 | 1 | 59,3 | 2,33 | 0 | 0,19 | 0,09 | 0 | 0,23 | 0,04 | 33,8 |
| **Weißzement** | 19,49 | 4,16 | 0,33 | 71,13 | 2,09 | 0 | 0,16 | 0,09 | 0 | 0,03 | 0,03 | 2,28 |
| **Grauzement** | 17,19 | 4,31 | 3,41 | 71,32 | 1,19 | 0 | 0,37 | 0,27 | 0,05 | 0,14 | 0,03 | 1,85 |

### Beispiel 3: Eigenschaften eines erfindungsgemäßen HWL-Elements

Heraklith-Platten (25 mm) wurden auf einer Pressenanlage aus folgender Rezeptur hergestellt: 50 Gew.-% Bindemittel (Alphagips der Mahlung AGMM der Fa. Knauf Gips KG, darin anteilig 0,25 Gew.-% Fließmittel Melment F15g), 24 Gew.-% Holzwolle und 26 Gew.-% Wasser. Die HWL-Elemente wurden nach 24 Stunden Reifung in einer temperierten Halle ausgeformt und anschließend bei 150 °C für 8 bis 10 min getrocknet.

Die HWL-Elemente wurden danach bei 23 °C und 50 % relative Luftfeuchte in einem Klimaraum gelagert und täglich auf ihr Schwindeverhalten untersucht.

Bei den wie vorstehend beschriebenen HWL-Elementen fand nach 4 bis 5 Tagen kein Schwinden mehr statt. Selbst innerhalb der Zeit, in der das Schwinden auftrat, wurde die Toleranzgrenze von maximal 1 mm in der Breite und in der Länge nie erreicht:
Schwinden in der Breite maximal 0,38 mm auf 600 mm Gesamtbreite
Schwinden in der Länge maximal 0,6 mm auf 1000 mm Gesamlänge

HWL-Elemente auf Basis eines Gips-Bidemittels haben vorteilhafterweise schon direkt nach ihrer Ausformung und Trocknung eine hohe Formstabilität erreicht und können daher sofort weiterverarbeitet werden. Im Gegensatz dazu ist dies bei üblichen HWL-Elementen auf Basis von Zement-Bindemitteln nur mit erhöhtem Materialaufwand möglich.

Zudem zeigen die vorstehenden HWL-Elemente auf Basis von Gips-Bindemittel nach 24 Stunden Trocknung bei Raumtemperatur folgende vorteilhaften Eigenschaften:

| | |
|---|---|
| Rohdichte: | 527 kg/m³ |
| Biegefestigkeit: | 1699 kPa (Vorgabe: minimal 1000 kPa bei einer Dicke von 25 mm homogen nach EN 13168) |
| Druckfestigkeit: | 328 kPa (Normvorgabe 200 kPa nach EN 13168, geprüft nach EN 826) |

## Patentansprüche

1. Bindemittelsystem zur Herstellung von Holzwolle-Leichtbauelementen (HWL-Elementen), umfassend
(i) Gips in einer Menge von mindestens 50 Gew.-%, bezogen auf das Gesamtgewicht des Bindemittelsystems;
(ii) mindestens ein Fließmittel; und
(iii) optional Zement in einer Menge von weniger als 50 Gew.-%, bezogen auf das Gesamtgewicht des Bindemittelsystems.

2. Bindemittelsystem nach Anspruch 1, wobei das Bindemittelsystem keinen Zement enthält.

3. Bindemittelsystem nach Anspruch 1 oder 2, wobei der Gips α-Calciumsulfat-Halbhydrat umfasst.

4. Bindemittelsystem nach einem der Ansprüche 1 bis 3, wobei das mindestens eine Fließmittel ein Melamin-Formaldehyd-Sulfonat umfasst.

5. Bindemittelsystem nach einem der Ansprüche 1 bis 4, wobei die Menge an Fließmittel 0,01 bis 5 Gew.-%, bezogen auf das Gesamtgewicht des Bindemittelsystems, beträgt.

6. Bindemittelsuspension, umfassend das Bindemittelsystem nach einem der Ansprüche 1 bis 5 in einer Menge von 50 bis 75 Gew.-%, bezogen auf das Gesamtgewicht der Bindemittelsuspension, und Wasser in einer Menge von 25 bis 50 Gew.-%, bezogen auf das Gesamtgewicht der Bindemittelsuspension.

7. Holzwolle-Leichtbauelement (HWL-Element), umfassend die Bindemittelsuspension nach Anspruch 6 in einer Menge von 40 bis 90 Gew.-%, bezogen auf das Gesamtgewicht des Holzwolle-Leichtbauelements, in abgebundener Form, und Holzfasern in einer Menge von 10 bis 60 Gew.-%, bezogen auf das Gesamtgewicht des Holzwolle-Leichtbauelements.

8. Holzwolle-Leichtbauelement nach Anspruch 7, weiter umfassend mindestens einen nicht brennbaren inerten Füllstoff in einer Menge von 0 bis 15 Gew.-%, bezogen auf das Gesamtgewicht des Holzwolle-Leichtbauelements.

9. Holzwolle-Leichtbauelement nach Anspruch 8, wobei der mindestens eine nicht brennbare inerte Füllstoff aus natürlichen und künstlichen Füllstoffen, sowie deren Kombinationen ausgewählt ist,
wobei die natürlichen Füllstoffe aus der Gruppe, bestehend aus Schwerspat, Magnetit, Hämatit, Limonit, Ilmenit, Serptentin, Flußsand, Flußkies, Grubenkies, Brechsand, Splitt, Steinschlag, Schotter aus gesundem Naturstein, sehr feinen Natursanden, Naturbims, Lavakies, Lavasand, Kieselgur, Schaumlava und Tuffen, sowie deren Kombinationen, ausgewählt sind, und
wobei die künstlichen Füllstoffe aus der Gruppe, bestehend aus Stahlschrott, Stahlspänen, Stahlsand, Sintererzen, Ferrosilizium, Ferrophosphor, Metallschlacken, Betonklinkerbruch, künstlichem Korund, Siliziumcarbid, Sintersplitt, Blähperlit, Blähglimmer, Blähschiefer, Blähton, Diatomit, Ziegelsplitt, Steinkohlenschlacken, Steinkohlenflugaschen, Müllschlacken, granuliertem HOS, Hüttenbims, Sinterbims und Schaumkunststoffen, sowie deren Kombinationen, ausgewählt sind.

10. Holzwolle-Leichtbauelement nach Anspruch 8, wobei der mindestens eine nicht brennbare inerte Füllstoff Flußsand ist.

11. Holzwolle-Leichtbauelement nach einem der Ansprüche 7 bis 10, wobei die Holzwollefasern Holzfasern, Holzwolle und/oder Zellulose umfassen.

12. Verbundelement, umfassend mindestens zwei Schichten, wobei mindestens eine Schicht ein Holzwolle-Leichtbauelement nach einem der Ansprüche 7 bis 11 ist.
